# EUROPÄISCHE PATENTANMELDUNG

(11) **EP 1 801 038 A1**
(43) Veröffentlichungstag der Anmeldung: **27.06.2007**
(21) Anmeldenummer: 05027898.5
(22) Anmeldetag: 20.12.2005
(51) Int. Cl.: B65D 90/22, B65D 55/06, F16J 13/24

(54) **Verriegelung des Spannrings bei Transportcontainer mit Öffnung**

(71) Anmelder: RUDOLF WILD GmbH & CO. KG, 69214 Eppelheim (DE)
(72) Erfinder: Wild, Hans-Peter, Dr., 69214 Eppelheim (DE); Liebenstein, Rainer, 69254 Malsch (DE)
(74) Vertreter: Grünecker, Kinkeldey, Stockmair & Schwanhäusser Anwaltssozietät

(57) **Zusammenfassung**

Die Erfindung betrifft einen Behälter (1) für Flüssigkeiten mit einer Öffnung (4) und einem Deckel (3), wobei ein Spannring (5) vorgesehen ist, um den Deckel (3) auf dem Behälter (1) zum Verschließen der Öffnung (4) zu fixieren, wobei der Deckel (3) ein vom Deckel (3) abstehendes Gasauslassventil (7) und eine Sicherheitseinrichtung (10) umfasst, die so in den Spannring (4) mit einem Riegel (11) eingreifen kann, dass ein Lösen des Spannrings (4) nur möglich ist, falls das Ventil (7) geöffnet ist, wobei sich die Sicherheitseinrichtung (10) mit einem ersten Teil (10b) entlang des Gasauslassventils (7) erstreckt und ein zweiter Teil (10a) sich, ausgehend von dem ersten Teil (10b), zu dem Riegel (11) erstreckt. Weiterhin betrifft die Erfindung einen Behälter (1) für Flüssigkeiten mit einer Öffnung (4) und einem Deckel (3), wobei ein Spannring (5) vorgesehen ist, um den Deckel (3) auf dem Behälter (1) zum Verschließen der Öffnung (4) zu fixieren, wobei der Deckel (3) ein Gasauslassventil (7) und eine Sicherheitseinrichtung (10) umfasst, die so in den Spannring (5) eingreifen kann, dass ein Lösen des Spannrings (5) nur möglich ist, falls das Ventil (7) geöffnet ist, wobei die Sicherheitseinrichtung (10) von dem Gasauslassventil (7) vollständig lösbar ist.

## Beschreibung

Die Erfindung betrifft eine Verriegelung eines Spannrings, wie er zum Verschließen von Transportcontainem für Flüssigkeiten eingesetzt wird.

Aus der EP 1 215 138 B1 ist ein System zum Verriegeln eines Spannrings bekannt, bei dem eine Druckentlastungsvorrichtung von einem Deckel zum Verschließen der Öffnung nach oben hin absteht. Von der Druckentlastungsvorrichtung erstreckt sich in waagerechter Richtung weg ein Teil eines Sicherungsmittels an dessen Ende ein nach unten gerichteter Bolzen vorgesehen ist, der durch ein Loch in dem Spannring in diesen eingreift.

Dieser Sicherungsmechanismus ist in verschiedener Hinsicht nachteilig. Es hat sich gezeigt, dass die Sicherungsmittel gelegentlich verbiegen und ein Auseinandemehmens des Ventils oder des Sicherungsmittels nur mit großen Mühen möglich ist. Weiter ist in einem solchen Fall ein Austausch von Ventil und Sicherungsmittel nötig, was mit erheblichen Kosten verbunden ist.

Aufgabe der vorliegenden Erfindung ist es daher, eine Verriegelung für einen Spannring zu schaffen, die robuster und/oder kostengünstiger ist. Diese Aufgabe wird gelöst durch einen Behälter nach Anspruch 1 und einen Behälter nach Anspruch 11.

Vorteilhafte Ausführungsformen sind in den Unteransprüchen offenbart.

Die Sicherheitseinrichtung, mit der der Spannring verriegelt werden kann, weist zwei miteinander verbundene Teile auf, wobei sich ein Teil entlang des Gasauslassventils erstreckt und ein zweiter Teil sich, ausgehend von diesem Teil, zu dem Riegel hin erstreckt, mit dem der Spannring verriegelt werden kann. Durch diese Bauweise ergibt sich eine weniger stark ausladende Konstruktion, die für Verbiegungen wesentlich weniger anfällig ist.

Von dem zweiten Teil ausgehend, kann sich ein Riegel senkrecht weg erstrecken. Durch die Konstruktion ist es möglich, dass der Riegel sehr kurz gehalten wird, sodass sich ein Verbiegen des Riegels selbst praktisch ausschließen lässt.

Der Riegel hat vorteilhafterweise eine solche Länge, dass er durch den Spannring hindurch bis in z. B. einen Flansch des Behälters reicht. Dabei wird eine sehr gute Verriegelung des Spannrings erreicht, da der Spannring in Bezug auf den Flansch fixiert wird.

Die Sicherungseinrichtung verfügt vorteilhafterweise weiterhin über einen Ringteil, der eine ringförmige Öffnung aufweist, mit dem er über das Gehäuse des Gasauslassventils geschoben werden kann. Dies ermöglicht ein leichtes Zusammen- und Auseinanderbauen der Verriegelung bzw. der Sicherheitseinrichtung.

An dem Gasauslassventilgehäuse kann ein zweiter Riegel vorgesehen sein, der mit einem Bauteil des Gasauslassventils so verbunden ist, dass das Ventil nur bei eingesetztem Riegel funktionsfähig ist, wobei dieser Riegel dann ein Abziehen des Ringteils des Sicherungsmittels verhindert. Dadurch kann erreicht werden, dass der Spannring erst dann gelöst werden kann, wenn der Verriegelungsmechanismus auseinander genommen wurde, wobei dann damit auch gleichzeitig das Gasauslassventil so beeinflusst wurde, dass Gas aus dem Behälter austreten kann. Damit wird verhindert, dass der Spannring gelöst werden kann, so lange sich der Behälter noch unter Druck befindet.

In einer vorteilhaften Ausführungsform ist der Riegel, der den Spannring verriegelt, von dem zweiten Teil der Sicherheitseinrichtung völlig verdeckt. Dies schützt den Riegel vor mechanischen Einwirkungen und verlängert so die Lebensdauer des Systems.

Weiterhin können Mittel vorgesehen sein, mit denen das Ventil verplombt werden kann. Dies kann beispielsweise eine Öffnung in dem Gehäuse des Gasauslassventils sein, durch das eine Plombe gezogen werden kann. Damit kann zum Beispiel ein oberer Teil des Gasauslassventils mit dem Gehäuse verplombt werden, so dass ein Entfemen der Sicherheitseinrichtung nur dann möglich ist, wenn die Plombe geöffnet wird. Dadurch kann durch Prüfen der Plombe sichergestellt werden, das an dem Behälter keine Manipulationen vorgenommen wurden, insbesondere, dass weder das Ventil, noch der Spannring noch das Mannloch geöffnet wurden.

Ein Behälter für Flüssigkeiten weist eine Sicherheitseinrichtung auf, mit der ein Spannring verriegelt werden kann, wobei der Spannring nur dann gelöst werden kann, wenn das Ventil geöffnet ist, wobei die Sicherheitseinrichtung von dem Gasauslassventil vollständig lösbar ist. Bei einer verbogenen Sicherheitseinrichtung ist es somit möglich, allein diese Sicherheitseinrichtung auszutauschen, ohne das ein Austausch sowohl von Ventil als auch von Sicherungseinrichtung nötig ist. Dies erlaubt einen wesentlich kostengünstigeren Betrieb.

Vorteilhafterweise kann das Lösen werkzeuglos erfolgen, sodass die Handhabung einfach ist.

Eine bevorzugte Ausführungsform der Erfindung soll anhand der beiliegenden Figuren erläutert werden. Dabei zeigt:
- Figur 1: eine schematische Schnittansicht eines Behälters,
- Figur 2: eine schematische dreidimensionale Ansicht des Gasauslassventils und der Sicherheitseinrichtung,
- Figur 3 a: eine schematische dreidimensionale Ansicht des Gasauslassventils ohne Sicherheitseinrichtung,

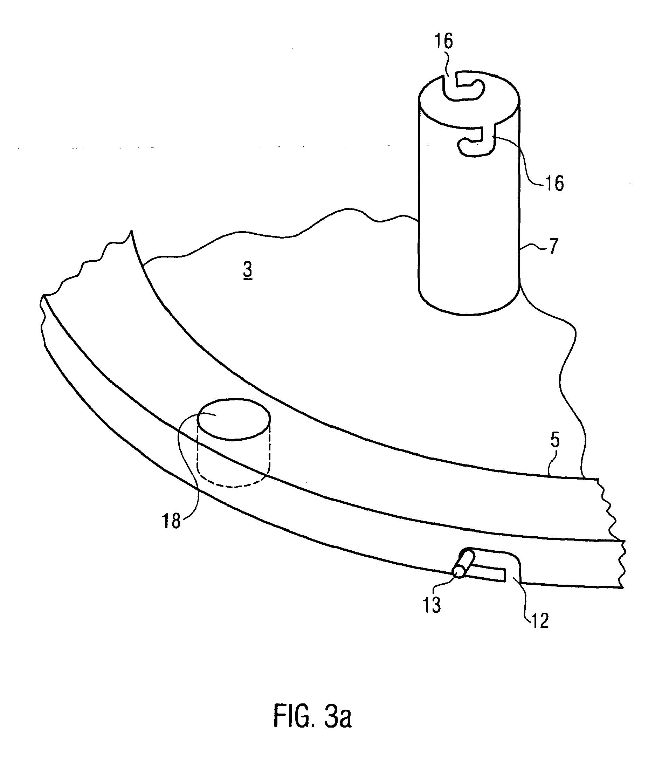

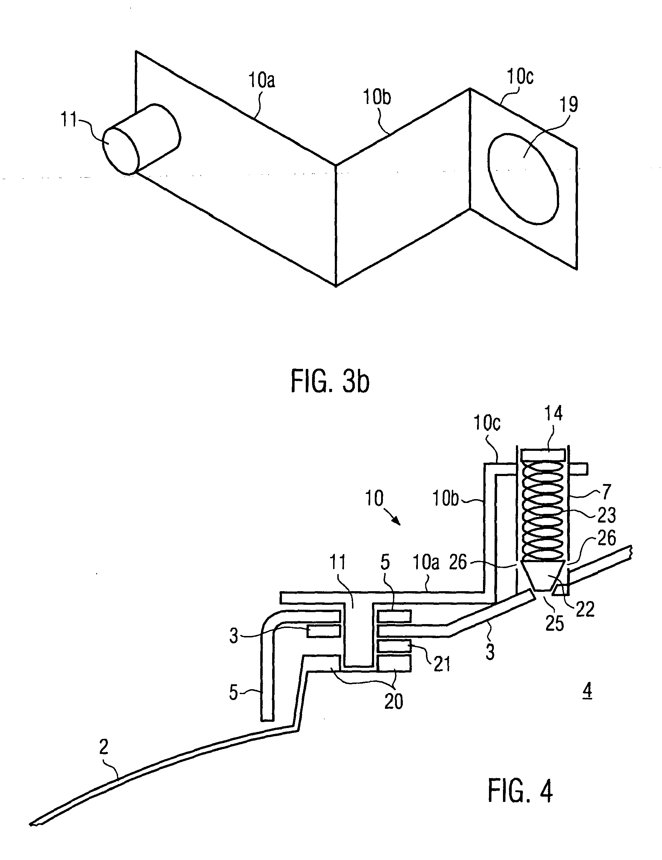

- Figur 3 b: die Sicherheitseinrichtung,
- Figur 4: eine schematische Schnittzeichnung durch Gasauslassventil und Sicherheitseinrichtung im zusammengebauten Zustand.

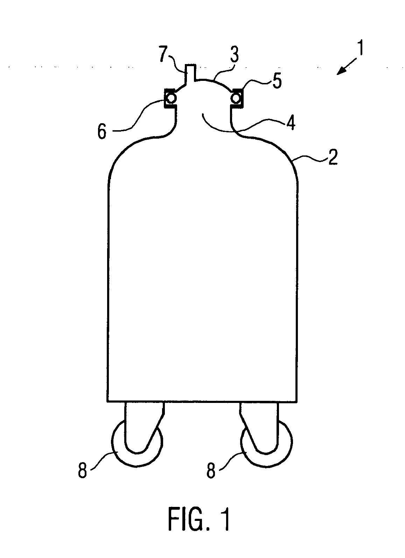

In Figur 1 ist ein Behälter 1 gezeigt, in den Flüssigkeiten aufgenommen werden können. Dieser Behälter weist üblicherweise an seinem unteren Ende oder an der Seitenwand im unteren Bereich einen Auslass auf, der hier jedoch der Übersichtlichkeit halber nicht dargestellt ist. Der Behälter 1 kann Rollen 8 aufweisen, mit denen der Behälter transportiert werden kann. Auch andere Transportmittel, wie etwa Angriffsmöglichkeiten für Gabelstapler oder Ähnliches, können vorgesehen sein. Der Behälter kann also als Transportbehälter ausgebildet sein.

Der Behälter 1 weist einen Tank 2 auf, der eine Öffnung 4 an seinem oberen Ende hat. Diese Öffnung 4 dient dazu, das Innere des Tanks 2 zugänglich zu machen, beispielsweise für Wartungsarbeiten, Reinigung oder Ähnlichem. Die Öffnung 4 wird auch Mannloch genannt.

In der Regel ist die Öffnung 4 verschlossen. Dazu dient ein Deckel 3, der mit einer Dichtung 6 auf den Behälter 2 aufgesetzt und dicht verschlossen werden kann. Zum Aufdrücken und Halten des Deckels 3 auf dem Tank 2 dient ein Spannring 5. In dem Deckel 3 ist ein Gasauslassventil 7 angeordnet. Das Gasauslassventil 7 dient dazu, einen Überdruck in dem Tank 2 abzubauen bzw. zu begrenzen.

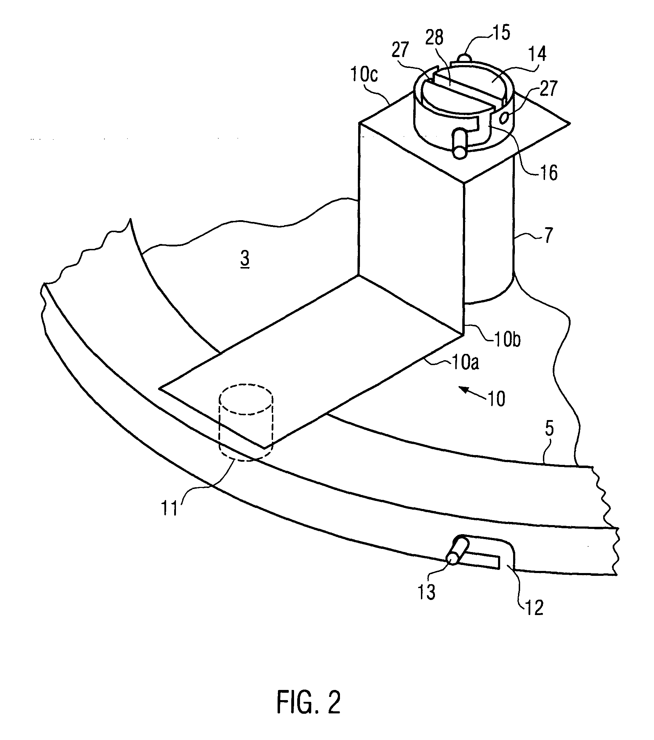

In Figur 2 sind das Gasauslassventil 7 sowie die Sicherheitseinrichtung 10 zusammen mit dem Spannring 5 in dreidimensionaler schematischer Ansicht dargestellt. Das Gehäuse des Gasauslassventils 7 erstreckt sich von dem Deckel 3 aus senkrecht nach oben. Über das Gehäuse das Gasauslassventils 7 ist eine Sicherheitseinrichtung 10 aufgesteckt. Hierzu weist die Sicherungseinrichtung 10 ein Ringteil 10c auf, das eine ring- oder kreisförmige Öffnung aufweist. Andere Öffnungsformen als ringförmig (beispielsweise quadratisch, rechteckig, elliptisch oder Ähnliches) sind auch möglich.

An dem Ringteil 10c schließt sich ein erster Teil 10b an, der entlang des Gasauslassventils nach unten verläuft. Von dem ersten Teil 10b ab erstreckt sich an seinem unteren Ende in horizontaler Richtung der zweite Teil 10a der Sicherheitseinrichtung 10. An dem zweiten Teil 10a der Sicherheitseinrichtung 10 ist der Riegel 11 vorgesehen, der sich senkrecht nach unten erstreckt. Der Riegel 11 ist, wie in Figur 2 zu sehen, durch den zweiten Teil 10a der Sicherheitseinrichtung 10 völlig abgedeckt.

Der Spannring 5 weist Nuten 12 auf, wobei der Behälter 2 Stifte 13 aufweist, die durch die Nuten 12 geführt werden können. Die Nuten 12 und die Stifte 13 wirken so zusammen, dass der Spannring 5 in eine Verriegelungsposition gedreht werden kann, in der der Deckel 3 fest auf dem Behälter 2 aufsitzt (siehe Figur 2). Weiterhin kann der Spannring 5 in eine Position gedreht werden, in der der Spannring zusammen mit dem Deckel 3 von dem Behälter 2 abgenommen werden können. Um diese Drehung zu verhindern, dient der Riegel 11, sodass diese Drehung nur möglich ist, falls der Riegel 11 entfernt ist.

Ein solcher Zustand ist in Figur 3a gezeigt. Hier ist eine Öffnung 18 zu erkennen, die sich durch den Spannring 5, den Deckel 3 und bis in den Behälter 2 erstreckt.

Wie in Figur 2 zu sehen, ist im oberen Bereich des Gasauslassventils 7 ein Körper 14 angeordnet, durch den sich ein zweiter Riegel 15 erstreckt. Der Riegel 15 kann in das Gehäuse des Gasauslassventils 7 eingesetzt werden, wobei hierfür in dem Gehäuse entsprechende Nuten 16 vorgesehen sind. Der Riegel 15 ist hierbei derart ausgestaltet, dass der ringförmige Teil 10c nicht von dem Gasauslassventil 7 abgezogen werden kann, so lange der Riegel 15 in das Gasauslassventil 7 eingesetzt ist.

In dem Körper 14 ist eine Rille 28 vorgesehen. Bei eingesetztem und mit dem Riegel 15 verriegelten Körper 14 fluchtet die Rille mit zwei Öffnungen 27 in dem Gehäuse des Gasauslassventils 7. Durch die Öffnungen 27 kann eine Plombe gezogen werden, die z.B. oberhalb von dem Gehäuse des Gausauslassventils 7 geschlossen wird. Dadurch ist ein Entfernen des Körpers 14 und damit des Riegels 15 nur dann möglich, wenn die Plombe entfernt oder verletzt wurde. Damit kann die Orginalität des Verschließens des Mannlochs geprüft werden. Die Rille 28 ist hierfür nicht unbedingt erforderlich, da auch bei einer Plombe oberhalb des Körpers 14 dieser nicht ohne Verletzung der Plombe entfernt werden kann. Mit der Rille 28 kann jedoch bereits ein Verdrehen des Körpers 14 zum Entriegeln des Riegels 15 ohne Verletzung der Plombe verhindert werden.

In Figur 3 b ist die Sicherheitseinrichtung 10 einzeln dreidimensional schematisch dargestellt, so wie sie einzeln ausgetauscht werden kann.

In Figur 4 ist das Gasauslassventil 7 zusammen mit der Sicherheitseinrichtung 10, dem Deckel 3 und dem Behälter 2 in einer Schnittansicht gezeigt. Der Behälter 2 weist einen Flansch 20 auf, der sich rund um die Deckelöffnung 4 erstreckt. Auf dem Flansch 20 liegt eine Dichtung 21 auf, auf die der Deckel 3 aufgedrückt wird. Der Deckel 3 wird mit einem Spannring 5 gesichert. Im zusammengebauten Zustand weisen der Spannring 5, der Deckel 3 und der Flansch 20 Löcher auf, die jeweils in geeigneter Weise übereinander liegen. Durch diese übereinanderliegenden Löcher kann ein Riegel 11 der Sicherheitseinrichtung 10 durchgeschoben werden. Der Riegel 11 verhindert dann ein Verdrehen des Spannrings 5 oder des Deckels 3 gegenüber dem Behälterflansch 20. Der Riegel 11 ist von dem zweiten Teil 10a der Sicherheitseinrichtung 10 abgedeckt und wird so vor Verbiegungen geschützt.

Der Teil 10a ist unmittelbar über den Deckel 3 mit dem ersten Teil 10b der Sicherheitseinrichtung 10 verbunden. Die Verbindung kann auch von dem Deckel 3 beabstandet sein, um so beim Zusammenbau etwas mehr Spiel zu haben. Auch kann die Verbindung deutlich von dem Deckel 3 abgesetzt sein. Die Teile 10a und 10b können auch gekrümmt sein oder durch die beiden Enden eines etwa um 90° gebogenen Teils gegeben sein. Der erste und der zweite Teil müssen auch nicht einstückig sein, sondern können auch selber aus mehreren evtl. gerade bzw. ebenen Stücken zusammengesetzte sein. Beispielsweise kann statt eines einstückigen ersten Teils auch ein zweistückiges Teil vorgesehen sein, das zwei unter einem Winkel zusammenlaufende Stücke umfasst. Ein Stück grenzt an das erste Teil vorzugsweise unter einem Winkel zwischen 90° und 180°. Der Winkel zwischen den beiden Stücken ist vorzugsweise auch zwischen 90° und 180°.

In dem Gehäuse des Gasauslassventils 7 befindet sich der Körper 14, der mit dem zweiten Riegel 15 (siehe Figur 2) verbunden ist. Dieser Körper 14 drückt auf eine Feder 23, die ihrerseits auf ein Verschlussstück 22 drückt, mit dem eine Öffnung 25 in dem Deckel 3 verschlossen wird. Das Verschlussstück 22 kann eine Dichtung umfassen. Die Feder 23 ist mit ihrer Federkraft so gewählt, dass bei einem gewünschten Überdruck in dem Behälter 2 das Verschlussstück 22 gegen die Federkraft so nach oben gedrückt wird, dass der Überdruck bis zu einem bestimmten Überdruck abgebaut wird. Das aus der Öffnung 25 ausströmende Gas kann durch seitlich im Gehäuse des Gasauslassventils 7 vorgesehene Öffnungen 26 in die Umgebung entweichen.

Soll der Spannring 5 geöffnet werden, so muss zunächst das Bauteil 14 des Gasauslassventils 7 entfernt werden, wozu dieses an dem Riegel 15 gedreht und durch die Nuten 16 nach oben hin entfernt wird (siehe Figur 2). Dadurch wird das Gasauslassventil 7 funktionsunfähig gemacht bzw. völlig geöffnet. Der Druck durch die Feder 23 auf das Verschlussstück 22 fehlt, sodass das Verschlussstück 22 bei jedem beliebigen Überdruck die Öffnung 25 freigibt. Ein jeglicher Überdruck in dem Behälter 2 wird somit abgebaut. Der Behälter 2 befindet sich somit in seinem Inneren auf Normaldruck.

Durch Abnehmen des Bauteils 14 kann die Sicherheitseinrichtung 10 von dem Gehäuse des Gasauslassventils 7 nach oben hin abgezogen werden, wodurch der Spannring 5 zum Drehen freigegeben wird. Mit dieser Konstruktion ist ein Öffnen des Spannrings nur bei außer Kraft gesetztem Gasauslassventil möglich.

Dies ist gerade für Transportbehälter von Vorteil, bei denen diejenigen Personen, die das Befüllen bewerkstelligen nicht diejenigen sind, die die Behälter entleeren. Letztere werden sich nicht unbedingt mit allen technischen Details der Transportcontainer auskennen, so dass ein Transportcontainer vorteilhaft ist, der Fehlbedienungen, wie etwa das Öffnen des Mannlochs bei unter Druck stehendem Behälter, verhindert.

## Patentansprüche

1. Behälter (1) für Flüssigkeiten mit
einer Öffnung (4) und einem Deckel (3), wobei ein Spannring (5) vorgesehen ist, um den Deckel (3) auf dem Behälter (1) zum Verschließen der Öffnung (4) zu fixieren,
wobei der Deckel (3) ein vom Deckel (3) abstehendes Gasauslassventil (7) und eine Sicherheitseinrichtung (10) umfasst, die so in den Spannring (4) mit einem Riegel (11) eingreifen-kann, dass ein Lösen des Spannrings (4) nur möglich ist, falls das Ventil (7) geöffnet ist,
**dadurch gekennzeichnet, dass**
sich die Sicherheitseinrichtung (10) mit einem ersten Teil (10b) entlang des Gasauslassventils (7) erstreckt und ein zweiter Teil (10a) sich, ausgehend von dem ersten Teil (10b), zu dem Riegel (11) erstreckt.

2. Behälter nach Anspruch 1, **dadurch gekennzeichnet, dass** der erste Teil und der zweite Teil (10a, 10b) dicht oberhalb von dem Deckel (3) verbunden sind, vorzugsweise in einer Höhe von weniger als 50 %, noch bevorzugter in einer Höhe weniger als 25 % und vorzugsweise in einer Höhe von weniger als 10 % der Höhe des Gasauslassventils (7).

3. Behälter nach Anspruch 1 oder 2, **dadurch gekennzeichnet, dass** der zweite Teil (10a) sich im wesentlichen parallel zu der Deckeloberfläche erstreckt.

4. Behälter nach einem der Ansprüche 1 bis 3, **dadurch gekennzeichnet, dass** sich der Riegel (11) senkrecht von dem zweiten Teil (10a) wegerstreckt.

5. Behälter nach einem der Ansprüche 1 bis 4, **dadurch gekennzeichnet, dass** der Riegel (11) durch den Spannring (5) hindurch bis in den Behälter (2), vorzugsweise in einen dort angeordneten Flansch (20), ragt.

6. Behälter nach einem der Ansprüche 1 bis 5, **dadurch gekennzeichnet, dass** sich von dem ersten Teil (10 b) ein Ringteil (10c) wegerstreckt, das auf das Gehäuse des Gasauslassventils (7) geschoben werden kann.

7. Behälter nach Anspruch 6, **dadurch gekennzeichnet, dass** an und/oder in dem Gehäuse des Gasauslassventils (7) ein zweiter Riegel (15) angebracht werden kann, der ein Abziehen des Ringteils (10c) von dem Gehäuse verhindert.

8. Behälter nach Anspruch 7, **dadurch gekennzeichnet, dass** der zweite Riegel (15) mit einem Bauteil (24) des Gasauslassventils (7) so verbunden ist, dass das Gasauslassventil (7) bei entferntem zweitem Riegel (15) funktionsunfähig und/oder völlig geöffnet ist.

9. Behälter nach einem der Ansprüche 1 bis 8, **dadurch gekennzeichnet, dass** der erste Riegel (11) im zusammengebauten Zustand von dem zweiten Teil (10a) völlig verdeckt wird.

10. Behälter nach einem der Ansprüche 1 bis 9, **dadurch gekennzeichnet, dass** das Gasauslassventil verplombt werden kann.

11. Behälter (1) für Flüssigkeiten mit
einer Öffnung (4) und einem Deckel (3), wobei ein Spannring (5) vorgesehen ist, um den Deckel (3) auf dem Behälter (1) zum Verschließen der Öffnung (4) zu fixieren,
wobei der Deckel (3) ein Gasauslassventil (7) und eine Sicherheitseinrichtung (10) umfasst, die so in den Spannring (5) eingreifen kann, dass ein Lösen des Spannrings (5) nur möglich ist, falls das Ventil (7) geöffnet ist,
**dadurch gekennzeichnet, dass**
die Sicherheitseinrichtung (10) von dem Gasauslassventil (7) vollständig lösbar ist.

12. Behälter nach Anspruch 11, **dadurch gekennzeichnet, dass** das Lösen werkzeuglos erfolgen kann.
